# EUROPÄISCHE PATENTSCHRIFT

(11) **EP 2 771 165 B1**
(45) Veröffentlichungstag und Bekanntmachung des Hinweises auf die Patenterteilung: **16.09.2015**
(21) Anmeldenummer: 12787394.1
(22) Anmeldetag: 26.10.2012
(51) Int. Cl.: B29C 45/64, B29C 45/04, B29C 45/06, B29C 45/16

(54) **VERFAHREN UND VORRICHTUNG ZUR HERSTELLUNG VON BESCHICHTETEN FORMTEILEN**
METHOD AND DEVICE FOR PRODUCING COATED MOLDED PIECES
PROCEDE ET DISPOSITIF DE FABRICATION DE PIECES MOULEES REVETUES

(30) Priorität: 28.10.2011 DE 102011117267
(43) Veröffentlichungstag der Anmeldung: 03.09.2014
(73) Patentinhaber: KraussMaffei Technologies GmbH, 80997 München (DE)
(72) Erfinder: EICHLSEDER, Martin, 94167 Tettenweis (DE); SCHEIBE, Götz, 83620 Feldkirchen-Westerham (DE)
(74) Vertreter: Wilhelm, Ludwig
(86) Internationale Anmeldenummer: PCT/EP2012/071200
(87) Internationale Veröffentlichungsnummer: WO 2013/060808

(56) Entgegenhaltungen:
- EP-A2- 0 281 952
- DE-A1- 10 335 223
- DE-A1-102007 051 701
- DE-A1-102010 033 675
- JP-A- 59 054 534
- US-A- 3 178 497
- US-A- 3 407 443
- US-A1- 2002 172 736

## Beschreibung

Die Erfindung betrifft ein Verfahren zum Herstellen von insbesondere spritzgegossenen, beschichteten Formteilen gemäß dem Oberbegriff des Anspruchs 1 sowie eine Vorrichtung zum Durchführen des Verfahrens gemäß dem Oberbegriff des Anspruchs 15.

Aus dem Stand der Technik sind bereits einige Verfahren zum Herstellen beschichteter Formteile bekannt. Dabei lässt sich grundsätzlich zwischen zwei Möglichkeiten zur Durchführung des Verfahrens unterscheiden.

Bislang ist es üblich, dass Formteile, insbesondere spritzgegossene Formteile in einem Spritzgießwerkzeug durch Spritzgießen hergestellt wurden und anschließend außerhalb der Spritzgussmaschine beispielsweise durch eine Sprühlackierung beschichtet wurden. Diese Verfahrensweise ist nicht nur aus Zeitgründen unwirtschaftlich, da bei dem Überführen des Formteils aus der Spritzgussmaschine hin zu einer Beschichtungsstation u. a. Probleme mit der Reinheit der Oberfläche des Formteils bestanden. Zum Beschichten des Formteils sollte die Oberfläche desselben nämlich möglichst frei von Staub und sonstigen Partikeln sein, was bei der beschriebenen Verfahrensweise ohne aufwändige Reinraumtechnik nicht immer sichergestellt werden konnte.

Seit einiger Zeit gibt es daher Verfahren und dazugehörige Spritzgussmaschinen, die sowohl ein Formwerkzeug zum Spritzgießen eines Formteils als auch ein Beschichtungswerkzeug zum Beschichten eines in dem Spritzgießwerkzeug hergestellten Formteils aufweisen. Bei diesem Verfahren wird ein Formteil zunächst in dem Spritzgießwerkzeug hergestellt, anschließend in das Beschichtungswerkzeug überführt und dann dort beschichtet. Auf diese Weise können zumindest die Probleme bezüglich der Reinheit teilweise beseitigt werden.

Ein derartiges Verfahren sowie eine entsprechende Vorrichtung sind beispielsweise aus der DE 10 2007 051 701 A1 bekannt. Die dort beschriebene Vorrichtung weist zwei Formwerkzeugseiten auf, eine mit drei und die andere mit zwei Formwerkzeughälften auf. Auf der einen Formwerkzeugseite ist zusätzlich ein Drehtisch angeordnet, der bei dem offenbarten Verfahren eine rotatorisch oszillierende Bewegung vollführt. Das hier offenbarte Verfahren ermöglicht es nicht nur ein Formteil in einer Spritzgießmaschine herzustellen und zu beschichten. Durch das Anordnen von drei Formwerkzeughälften auf der ersten Formwerkzeugseite und zwei Formwerkzeughälften auf der zweiten Formwerkzeugseite sowie der oszillierenden Bewegung des Drehtisches wird zudem ermöglicht, dass innerhalb eines Verfahrensschritts ein Formteil spritzgegossen wird, während ein zweites, zuvor spritzgegossenes Formteil beschichtet wird.

Zwar besteht bei diesem Verfahren durch die parallel ablaufenden Prozesse eine gewisse Zeitersparnis, es wird jedoch als nachteilig ersehen, dass die beiden parallel ablaufenden Prozesse weiterhin zeitlich voneinander abhängig sind, obwohl der Beschichtungsprozess in der Regel deutlich kürzer ist, als der Spritzgießprozess.

Es ist daher Aufgabe der Erfindung, die Prozessvariabilität und damit auch die Wirtschaftlichkeit gattungsgemäßer Verfahren zu verbessern.

Diese Aufgabe wird mit einem Verfahren gemäß Anspruch 1 sowie einer Vorrichtung gemäß Anspruch 15 gelöst. Vorteilhafte Weiterbildungen sind Gegenstand der jeweiligen Unteransprüche.

Das erfindungsgemäße Verfahren zum Herstellen von beschichteten Formteilen weist im Wesentlichen die folgenden Schritte auf:
In einem ersten Schritt werden Formwerkzeughälften einer ersten Formwerkzeugseite zu Formwerkzeughälften einer zweiten Formwerkzeugseite einer Spritzgießmaschine zugeordnet, so dass zumindest ein erstes Formwerkzeug vom Typ 1 und ein erstes Formwerkzeug vom Typ 2 gebildet werden. Im Sinne der Erfindung wird dabei ein jedes Formwerkzeug aus einer Formwerkzeughälfte der ersten Formwerkzeugseite und einer Formwerkzeughälfte der zweiten Formwerkzeugseite gebildet. Das Formwerkzeug vom Typ 1 unterscheidet sich vorzugweise von dem Formwerkzeug vom Typ 2. Der Begriff "Formwerkzeughälfte" ist im Sinne der Erfindung so zu verstehen, dass jede Formwerkzeughälfte gemeinsam mit einer weiteren Formwerkzeughälfte ein Formwerkzeug bildet. Dabei kann eine Formwerkzeughälfte durchaus eine tatsächliche, insbesondere geometrische Hälfte eines Formwerkzeugs sein, dies ist jedoch nicht zwingend erforderlich.

Nach der Zuordnung der Formwerkzeughälften werden die gebildeten Formwerkzeuge geschlossen. "Geschlossen" oder auch "Schließen" bedeutet im Sinne der Erfindung, dass ein Formwerkzeug mit der Schließkraft beaufschlagt ist, die für den jeweiligen im Werkzeug ablaufenden Prozess notwendig ist. So ist beispielsweise die zum Spritzgießen benötigte Schließkraft in der Regel deutlich höher als die zum Beschichten notwendige Schließkraft.

Dabei ist jedoch nicht ausgeschlossen, dass ein Formwerkzeug mit einer Schließkraft beaufschlagt wird, die höher ist als die notwendige Schließkraft.

Nach dem Schließen der Formwerkzeuge wird in dem Formwerkzeug vom Typ 1 ein Formteil spritzgegossen und in dem Formwerkzeug vom Typ 2 ein bereits durch Spritzgießen hergestelltes Formteil beschichtet. Diese beiden Prozesse, das Spritzgießen und das Beschichten, finden dabei simultan statt. Simultan im Sinne der Erfindung bedeutet dabei, dass sich die beiden Prozesse zumindest teilweise zeitlich überlappen. Da es in der Regel so ist, dass der Beschichtungsprozess deutlich kürzer dauert als der Spritzgießprozess, ist es vorteilhafter Weise so, dass beide Prozesse gleichzeitig beginnen, wodurch der Beschichtungsprozess deutlich früher zum Ende kommt als der Spritzgießprozess.

In einem weiteren Schritt des erfindungsgemäßen Verfahrens werden die Formwerkzeuge geöffnet, wobei zumindest das in dem vorherigen Schritt spritzgegossene Formteil in einer der Formwerkzeughälften verbleibt. Dieser Schritt kann erfindungsgemäß zumindest teilweise parallel zu dem vorherigen Schritt stattfinden. Da der Beschichtungsprozess deutlich kürzer dauert als der Spritzgießprozess, wird das Formwerkzeug vom Typ 2 bei einer erfindungsgemäßen Weiterbildung des erfindungsgemäßen Verfahrens bereits geöffnet, während der Spritzgießprozess noch andauert. Ein gleichzeitiges Öffnen der Formwerkzeuge ist jedoch auch möglich. Entscheidend ist, dass nach dem Abschluss dieses Verfahrensschrittes beide Formwerkzeuge geöffnet sind.

Anschließend werden die Formwerkzeughälften der ersten Formwerkzeugseite und/oder die Formwerkzeughälften der zweiten Formwerkzeugseite verlagert und erneut einander zugeordnet, so dass das im Rahmen des Verfahrens zuvor spritzgegossene Formteil in einem zweiten Formwerkzeug vom Typ 2 angeordnet ist und zusätzlich ein zweites Formwerkzeug vom Typ 1 gebildet wird. Vorteilhafter Weise wird das zweite Formwerkzeug vom Typ 2 durch die Formwerkzeughälfte, in der zuvor das im Rahmen des Verfahrens spritzgegossene Formteil verblieben ist, sowie eine weitere Formwerkzeughälfte gebildet.

Es erfolgt ein erneutes Schließen der Formwerkzeuge. Anschließend wird in dem zweiten Formwerkzeug vom Typ 1 ein weiteres Formteil spritzgegossen und das zuvor spritzgegossene Formteil wird in dem zweiten Formwerkzeug vom Typ 2 beschichtet.

Nach dem Abschluss der jeweiligen Prozesse werden die Formwerkzeuge wieder geöffnet, wobei auch hier ein gemeinsames oder ein unabhängiges Öffnen der Formwerkzeuge möglich ist.

Das erfindungsgemäße Verfahren zeichnet sich insbesondere dadurch aus, dass das Schließen der Formwerkzeuge in einem oder beiden der oben genannten Verfahrensschritte, die das Schließen der Formwerkzeuge umfassen, unabhängig voneinander, durch Bewegen der ersten Formwerkzeugseite und/oder der zweiten Formwerkzeugseite und/oder durch Bewegen einzelner Formwerkzeughälften erfolgt.

Durch das voneinander unabhängige Schließen der Formwerkzeuge ist es möglich die Eigenschaften der in den Formwerkzeugen ablaufenden Prozesse einzeln, also unabhängig voneinander zu beachten und das gesamte erfindungsgemäße Verfahren daraufhin abzustimmen.

Bei dem oben beschriebenen, gattungsgemäßen Verfahren war es nicht möglich die kürzere Dauer des Beschichtungsprozesses zu beachten und zu nutzen, wodurch das gesamte Verfahren weniger effizient ist.

Bei einer vorteilhaften Weiterentwicklung des erfindungsgemäßen Verfahrens werden die Formwerkzeuge und/oder die Formwerkzeughälften beim Schließen der Formwerkzeuge mit unterschiedlichen Schließkräften beaufschlagt. Dies erhöht insbesondere die Effizienz und die Wirtschaftlichkeit des erfindungsgemäßen Verfahrens, da auf das jeweilige Formwerkzeug nur die Schließkraft aufgebracht werden muss, die tatsächlich benötigt wird. Bei bisher bekannten Verfahren war es oftmals so, dass alle Formwerkzeuge mit der maximal benötigten Schließkraft beaufschlagt wurden, da die Formwerkzeuge nicht unabhängig voneinander geschlossen werden konnten.

Zum einen kann hier Energie eingespart werden und zum anderen ist es zusätzlich möglich die Formwerkzeughälften der Formwerkzeuge, die nur mit einer geringeren Schließkraft beaufschlagt werden, aus einem weniger festen Material auszubilden, was ebenfalls Kosten spart und die Wirtschaftlichkeit erhöht.

Als besonders vorteilhaft wird eine Weiterentwicklung des erfindungsgemäßen Verfahrens angesehen, bei der zum Schließen der Formwerkzeuge in den oben genannten Schritten zunächst die erste Formwerkzeugseite und/oder die zweite Formwerkzeugseite entlang einer Schließrichtung bewegt wird/werden, bis das Formwerkzeug vom Typ 1 geschlossen ist, d.h. mit der nötigen Schließkraft beaufschlagt ist. Dabei verbleibt das Formwerkzeug vom Typ 2 zumindest teilweise offen. Anschließend wird eine der Formwerkzeughälften des Formwerkzeugs vom Typ 2 entlang der Schließrichtung bewegt, bis das Formwerkzeug vom Typ 2 geschlossen ist, d.h. mit der für dieses Formwerkzeug notwendige Schließkraft beaufschlagt ist. Auf diese Weise ist es möglich, die Schließkräfte der einzelnen Formwerkzeuge gezielt und unabhängig voneinander einzustellen oder aufzubauen.

Zur Durchführung des erfindungsgemäßen Verfahrens wird es als besonders vorteilhaft angesehen, wenn als Formwerkzeug vom Typ 1 jeweils ein Spritzgießwerkzeug und als Formwerkzeug vom Typ 2 jeweils ein Beschichtungswerkzeug verwendet wird.

Bei einer vorteilhaften Weiterentwicklung des erfindungsgemäßen Verfahrens wird das Verlagern der Formwerkzeughälften in Form einer Linearbewegung in einer Verlagerungsrichtung durchgeführt. Die Verlagerungsrichtung liegt vorteilhafter Weise senkrecht zur Schließrichtung der Formwerkzeuge.

Bei einer besonders vorteilhaften Weiterentwicklung des erfindungsgemäßen Verfahrens kommt zur Realisierung der Linearbewegung ein Schiebetisch auf der ersten Formwerkzeugseite und/oder der zweiten Formwerkzeugseite, bevorzugt auf der beweglichen Formwerkzeugseite, zum Einsatz.

Eine Linearbewegung, insbesondere realisiert durch einen Schiebetisch, ist eine besonders einfach durchzuführende Bewegung, wodurch die Effizienz und Wirtschaftlichkeit des erfindungsgemäßen Verfahrens zusätzlich erhöht werden. Im Sinne der Erfindung ist jedoch auch grundsätzlich jede andere Bewegung möglich. Insbesondere ist die Verlagerung der Formwerkzeughälften auch mittels eines Drehtisches möglich.

Bei einer vorteilhaften Weiterentwicklung des erfindungsgemäßen Verfahrens wird das Formwerkzeug vom Typ 1 unabhängig von der Verlagerung der Formwerkzeughälften zumindest in der Verlagerungsrichtung zentral mittig bzgl. einer in Verlagerungsrichtung maschinenfesten ersten Formwerkzeugseite und/oder zweiten Formwerkzeugseite gebildet. Die zentral mittige Anordnung auf einer maschinenfesten Formwerkzeugseite ist besonders vorteilhaft, da dieses Formwerkzeug in der Regel mit der größten Schließkraft beaufschlagt wird. Würde diese Schließkraft nicht zentral mittig auf einer maschinenfesten Formwerkzeugseite aufgebracht, so hätte dies gravierende Folgen bezüglich der Abnutzung dieser Formwerkzeugseite und auf die Schließmechanismen der Spritzgussmaschinen. Zusätzlich würde ein nicht zentral mittiges Aufbringen dieser Schließkraft eine Anpassung der Lagerung der restlichen Formwerkzeughälften erfordern, was sich insbesondere dann bemerkbar machen würde, wenn die genannte Schließkraft nicht immer auf der gleichen Position aufgebracht würde.

Wie bereits erwähnt, ist es in vorteilhafter Weise so, dass das Öffnen des Formwerkzeugs vom Typ 2 bereits während des Spritzgießens des Formteils in dem Formwerkzeug vom Typ 1 erfolgt. Dabei ist die Dauer des Spritzgießprozesses im Sinne der Erfindung so zu verstehen, dass der Spritzgießprozess auch das Abkühlen und das Aushärten des Spritzgegossenen Formteils umfasst. Der Spritzgießprozess beginnt somit ab dem Schließen des Formwerkzeugs und dauert bis zum Öffnen des Formwerkzeugs. Gleiches gilt auch für den Beschichtungsprozess.

Bei einer vorteilhaften Weiterentwicklung des erfindungsgemäßen Verfahrens wird das Formwerkzeug vom Typ 2 während eines Verfahrensschritts sogar mehrfach, insbesondere auch während des Spritzgießens in dem Formwerkzeug vom Typ 1 geschlossen und geöffnet. Dies ist insbesondere dann vorteilhaft, wenn, wie oben beschrieben, der in dem Formwerkzeug vom Typ 2 ablaufende Beschichtungsprozess deutlich kürzer ist als der im Formwerkzeug vom Typ 1 ablaufende Spritzgießprozess. In diesem Fall ist es sogar möglich, mehrere Beschichtungsprozesse während der Dauer des Spritzgießprozesses durchzuführen und so ein Formteil mit mehreren Beschichtungen zu versehen.

Erfindungsgemäß werden die Formteile mit einer Beschichtungsmasse beschichtet, die bei einer vorteilhaften Weiterbildung des erfindungsgemäßen Verfahrens vor und/oder während und/oder nach dem Schließen des Formwerkzeugs vom Typ 2 in eine Formwerkzeughälfte des Formwerkzeugs vom Typ 2 und/oder auf das zu beschichtende Formteil aufgetragen wird. Der Zeitpunkt und der Ort des Auftragens der Beschichtungsmasse richten sich in erster Linie nach den Eigenschaften der Beschichtungsmasse und zudem nach den Gegebenheiten der Spritzgießmaschine, mit der das erfindungsgemäße Verfahren durchgeführt wird. So hängt es u. a. von der Konsistenz der Beschichtungsmasse ab, ob diese noch während des geöffneten Werkzeugs eingebracht werden kann. Oftmals ist die Beschichtungsmasse so dünnflüssig, dass dies nicht möglich ist, wodurch es dann erforderlich ist, die Beschichtungsmasse erst nach dem Schließen des Formwerkzeugs aufzutragen bzw. in eine zwischen dem spritzgegossenen Formteil und einer Formwerkzeughälfte bestehenden Kavität einzugeben, was im Sinne der Erfindung ebenfalls unter den Begriff "Auftrag" fällt. Bei einer Spritzgießmaschine mit einer vertikalen, d.h. senkrecht zum Boden gerichteten Schließrichtung ist der Auftrag der Beschichtungsmasse ebenfalls davon abhängig, ob die Formwerkzeughälfte, in der das Formteil nach dem Spritzgießprozess verbleibt, auf einer oberen oder einer unteren Formwerkzeugseite angeordnet ist. Befindet sich diese Formwerkzeughälfte und somit auch das spritzgegossene Formteil auf der unteren Formwerkzeugseite, so wird der Lack vorzugsweise auf dem Formteil aufgebracht.

Zusätzlich oder alternativ ist es bei einer vorteilhaften Weiterbildung des erfindungsgemäßen Verfahrens ebenfalls möglich eine Folie auf das Formteil aufzubringen, wobei diese Folie ebenfalls eine Beschichtung im Sinne der Erfindung darstellt. Hierzu wird vor dem Schließen des Formwerkzeugs vom Typ 2 eine Folie in einer Formwerkzeughälfte des Formwerkzeugs vom Typ 2 und/oder auf dem zu beschichtende Formteil platziert.

Bei einer besonders vorteilhaften Weiterbildung des erfindungsgemäßen Verfahrens ist dabei vorgesehen, dass, wie oben beschrieben, das Formwerkzeug vom Typ 2 während des im Formwerkzeug vom Typ 1 stattfindenden Spritzgießprozesses mehrfach geöffnet und geschlossen wird, wobei die Zeiträume zwischen dem jeweiligen Öffnen und Schließen des Formwerkzeugs vom Typ 2 einen eigenständigen Beschichtungsprozess darstellen. Dadurch ist es möglich, ein Formteil beispielsweise mit einer Beschichtungsmasse und anschließend mit einer Folie zu beschichten.

Durch die kürzere Dauer des Beschichtungsprozesses im Vergleich zu dem Spritzgießprozess ist es ebenfalls möglich, dass das beschichtete Formteil aus dem Formwerkzeug vom Typ 2 entnommen wird, während in dem Formwerkzeug vom Typ 1 der Spritzgießprozess noch andauert.

Bei einer vorteilhaften Weiterbildung des erfindungsgemäßen Verfahrens wird mittels eines in einer Formwerkzeughälfte des Formwerkzeugs vom Typ 2 vorhandenen Prägestempels eine Schwindung der Beschichtungsmasse ausgeglichen. Diese Schwindung, die insbesondere beim Aushärten oder Vernetzen der Beschichtungsmasse auftritt, ist nachteilig für die Qualität der Beschichtung, weshalb es wünschenswert ist, diese Schwindung auszugleichen.

Vorzugsweise ist die Beschichtungsmasse ein Lack, insbesondere ein Acryllack, oder ein Harz, insbesondere Polyurethan (PUR) oder in Reaktivsystem, welches unter Temperatur vernetzt oder teilvernetzt und anschließend, insbesondere unter UV, zu 100% vernetzt und dann als Duroplast vorliegt.

Die erfindungsgemäße Vorrichtung zum Durchführen des erfindungsgemäßen Verfahrens weist eine erste Formwerkzeugseite, auf der eine erste Anzahl N von Formwerkzeughälften angeordnet ist und eine zweite Formwerkzeugseite, auf der eine zweite Anzahl M von Formwerkzeughälften angeordnet ist, auf. Die Formwerkzeughälften der ersten Formwerkzeugseite und/oder der zweiten Formwerkzeugseite können dabei so angeordnet werden, dass sie in alternierbaren Kombinationen Formwerkzeuge bilden, wobei ein Formwerkzeug jeweils aus einer Formwerkzeughälfte der ersten Formwerkzeugseite und einer Formwerkzeughälfte der zweiten Formwerkzeugseite gebildet wird. Jedes der gebildeten Formwerkzeuge weist dabei eine Schließrichtung auf, die vorzugsweise bei allen Formwerkzeugen gleich ist.

Eine Formwerkzeughälfte der erfindungsgemäßen Vorrichtung kann unabhängig von den restlichen Formwerkzeughälften bewegt werden, um das von dieser Formwerkzeughälfte gebildete Formwerkzeug zu schließen und/oder zu öffnen.

Durch die Möglichkeit der unabhängigen Bewegung zumindest einer Formwerkzeughälfte ist die erfindungsgemäße Vorrichtung besonders zum Durchführen des erfindungsgemäßen Verfahrens geeignet, da auf diese Weise das Schließen der Formwerkzeuge unabhängig voneinander erfolgen kann.

Vorzugsweise weist die erfindungsgemäße Vorrichtung einen Schiebetisch und/oder einen Drehtisch auf, mittels dessen die Formwerkzeughälften der ersten Formwerkzeugseite oder der zweiten Formwerkzeugseite verlagert und zueinander gelagert werden können. Grundsätzlich sind auch andere Einrichtungen möglich, mit denen die Formwerkzeughälften verlagert und zueinander angeordnet werden können, die zwei Genannten werden jedoch besonders bevorzugt.

Um eine möglichst präzise Zentrierung der Formwerkzeughälften zueinander zu ermöglichen, ist bei einer vorteilhaften Weiterbildung der erfindungsgemäßen Vorrichtung vorgesehen, dass zumindest eine Formwerkzeughälfte der ersten Formwerkzeugseite und/oder der zweiten Formwerkzeugseite in zumindest einer Anordnungsebene schwimmend gelagert ist. Vorteilhaft liegt diese Anordnungsebene senkrecht zu der Schließrichtung der Formwerkzeuge, da auf diese Weise die Zentrierung am effizientesten erreicht werden kann.

Als besonders vorteilhaft wird es angesehen, wenn die erste Anzahl N von Formwerkzeughälften auf der ersten Formwerkzeugseite kleiner ist als die zweite Anzahl M von Formwerkzeughälften auf der zweiten Formwerkzeugseite. Insbesondere werden dabei Kombinationen, bei denen die Differenz der ersten Anzahl N und der zweiten Anzahl M eins (N - M = 1) ist, als vorteilhaft angesehen. Als besonders vorteilhaft wird die Kombination von zwei Formwerkzeughälften auf der ersten Formwerkzeugseite und drei Formwerkzeughälften auf der zweiten Formwerkzeugseite angesehen.

Bei einer vorteilhaften Weiterbildung der erfindungsgemäßen Vorrichtung ist vorgesehen, dass auf der ersten Formwerkzeugseite zwei Formwerkzeughälften einer ersten Art angeordnet sind, die jeweils in Kombination mit einer Formwerkzeughälfte einer zweiten Art ein Formwerkzeug vom Typ 1 bilden.

Vorteilhafter Weise sind dabei die zwei Formwerkzeughälften der ersten Art identisch. Dies ist jedoch nicht zwingend erforderlich. So ist es beispielsweise möglich, dass die zwei Formwerkzeughälften der ersten Art unterschiedliche Kavitäten aufweisen, wodurch bei Spritzgießen in diesen zwei Kavitäten unterschiedliche Formteile (Formteile unterschiedlicher Geometrien) hergestellt werden.

Auf der zweiten Formwerkzeugseite sind bei einer vorteilhaften Weiterbildung der erfindungsgemäßen Vorrichtung eine Formwerkzeughälfte der zweiten Art und zwei Formwerkzeughälften der dritten Art angeordnet. Eine Formwerkzeughälfte der dritten Art zeichnet sich dadurch aus, dass sie in Kombination mit einer Formwerkzeughälfte der zweiten Art ein Formwerkzeug vom Typ 2 bilden kann. Für die Formwerkzeugshälften der dritten Art gilt das oben für die Formwerkzeughälfte der ersten Art Gesagte entsprechend. D. h., dass die Formwerkzeughälften der dritten Art ebenfalls nicht identisch sein müssen.

Bei einer vorteilhaften Weiterbildung der erfindungsgemäßen Vorrichtung ist vorgesehen, dass die Formwerkzeughälfte der zweiten Art auf der zweiten Formwerkzeugseite zwischen den zwei Formwerkzeughälften der dritten Art und insbesondere an einer zentral mittigen Position der zweiten Formwerkzeugseite bezüglich der Verlagerungsrichtung angeordnet ist. Da die Formwerkzeughälfte der zweiten Art Bestandteil des Formwerkzeugs vom Typ 1 ist und daher mit großen Schließkräften beaufschlagt wird, ist es vorteilhaft diese Formwerkzeughälfte der zweiten Art in der genannten Art und Weise anzuordnen.

Vorteilhafter Weise können die Formwerkzeughälften der dritten Art jeweils unabhängig von den restlichen Formwerkzeughälften, auch unabhängig von anderen Formwerkzeughälften der dritten Art bewegt werden, und zwar insbesondere der Schließrichtung der Formwerkzeuge. Diese Bewegung wird bevorzugt mittels eines hydraulischen und/oder eines Servoantriebs ermöglicht.

Bei einer vorteilhaften Weiterbildung der erfindungsgemäßen Vorrichtung kann jede der Formhälften und insbesondere jede der Formhälften, die Teil eines Formwerkzeugs vom Typ 2 sind, einzeln, das heißt unabhängig von den restlichen Formwerkzeughälften temperiert, also aufgeheizt und abgekühlt werden. Dies wird auch als Dynamic-Mold-Heating (DMH) bezeichnet. Auf diese Weise kann die Vernetzung des Lacks oder des Reaktivsystems präzise gesteuert werden.

Nachfolgend wird die Erfindung anhand von acht Figuren beispielhaft erläutert. Dabei zeigen:

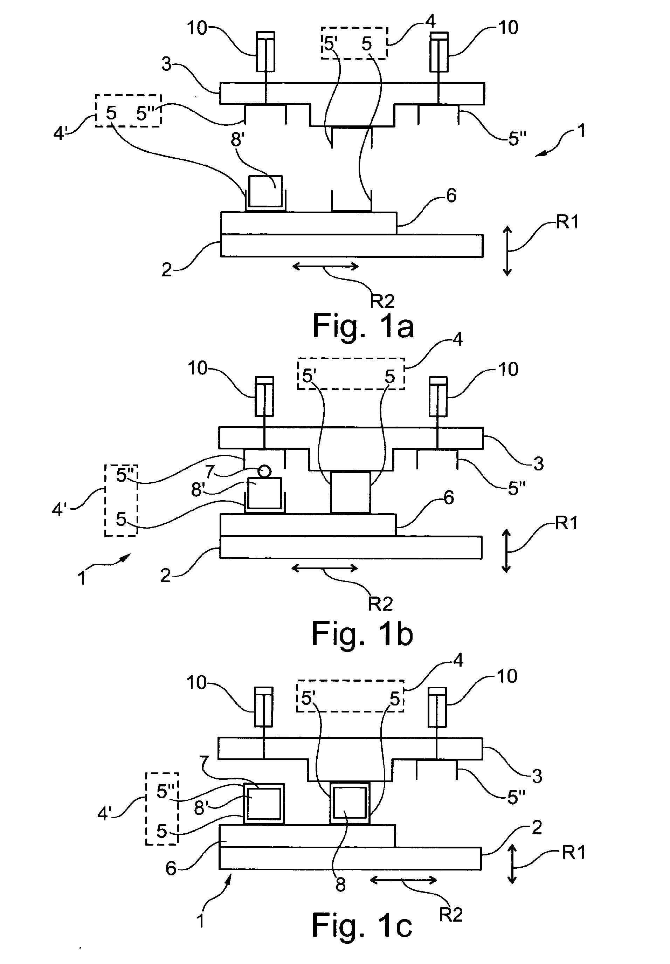

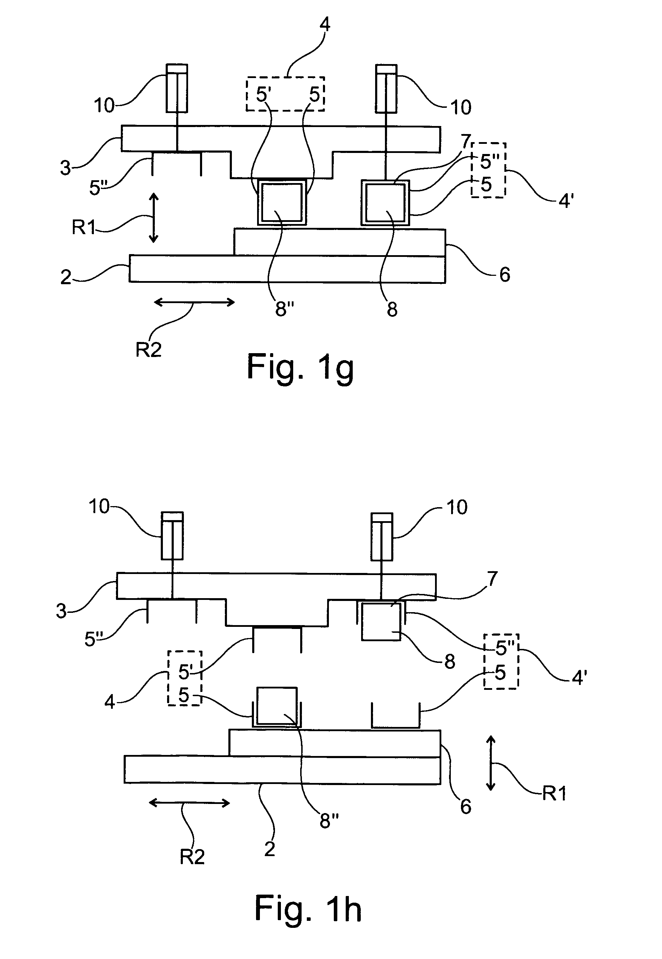

- Figur 1a bis 1h: den Ablauf des erfindungsgemäßen Verfahrens anhand einer schematischen Darstellung einer Ausführungsform der erfindungsgemäßen Vorrichtungsform.

Die Figur 1a zeigt die erfindungsgemäße Vorrichtung 1 mit einer ersten Formwerkzeugseite zwei und einer zweiten Formwerkzeugseite 3. Auf der ersten Formwerkzeugseite 2 ist ein Schiebetisch 6 angeordnet, auf dem wiederum 2 Formwerkzeughälften 5 der ersten Art angeordnet sind. Der Schiebetisch 6 ermöglicht es, die Formwerkzeughälften 5 der ersten Art in einer Verlagerungsrichtung R2 zu verlagern. Auf der zweiten Formwerkzeugseite 3 sind zwei Formwerkzeughälften 5" der dritten Art und eine Formwerkzeughälfte 5' der zweiten Art angeordnet, wobei die Formwerkzeughälfte 5' der zweiten Art zwischen den beiden Formwerkzeughälften 5" der dritten Art angeordnet ist. Somit sitzt die Formwerkzeughälfte 5' der zweiten Art zentral mittig bzgl. der Verlagerungsrichtung R2 auf der maschinenfesten zweiten Formwerkzeugseite 3. Beiden Formwerkzeughälften 5" der dritten Art ist jeweils z.B. ein Hubzylinder 10 zugeordnet, mittels der die Formwerkzeughälften 5" der dritten Art in einer Schließrichtung R1 der Vorrichtung 1 bewegbar sind.

Zu dem in der Figur 1a gezeigten Zeitpunkt während des erfindungsgemäßen Verfahrens befindet sich ein spritzgegossenes Formteil 8' in einer der Formwerkzeughälften 5 der ersten Art. Diese Formwerkzeughälfte 5 der ersten Art bildet zusammen mit einer der Formwerkzeughälfte 5" der dritten Art ein Formwerkzeug 4' vom Typ 2. Die zweite Formwerkzeughälfte 5 der ersten Art auf der ersten Formwerkzeugseite 2 bildet gemeinsam mit der Formwerkzeughälfte 5' der zweiten Art der zweiten Formwerkzeugseite 3 ein Formwerkzeug 4 vom Typ 1.

In der Figur 1b wurde die erste Formwerkzeugseite 2 in der Schließrichtung R1 auf die zweite Formwerkzeugseite 3 zu bewegt, wodurch das Formwerkzeug 4 vom Typ 1 geschlossen wurde. Ebenfalls wurde eine Beschichtungsmasse 7 auf das Formteil 8' aufgebracht. Das Formwerkzeug 4' vom Typ 2 ist zu diesem Zeitpunkt noch nicht geschlossen.

Das Schließen des Formwerkzeugs 4' vom Typ 2 erfolgt durch Ausfahren des Hubzylinders 10, der der Formwerkzeughälfte 5" der dritten Art, welche Teil des Formwerkzeugs 4' vom Typ 2 ist, zugeordnet ist.

In Figur 1c ist der anschließende Zustand ersichtlich.

In der Figur 1c ist außerdem zu sehen, dass der Spritzgussprozess in dem Formwerkzeug vom Typ 1 ebenfalls begonnen hat, wodurch ein Formteil 8 spritzgegossen wird. Durch das Schließen des Formwerkzeugs 4' vom Typ 2 wurde die Beschichtungsmasse 7 auf dem Formteil 8' verteilt.

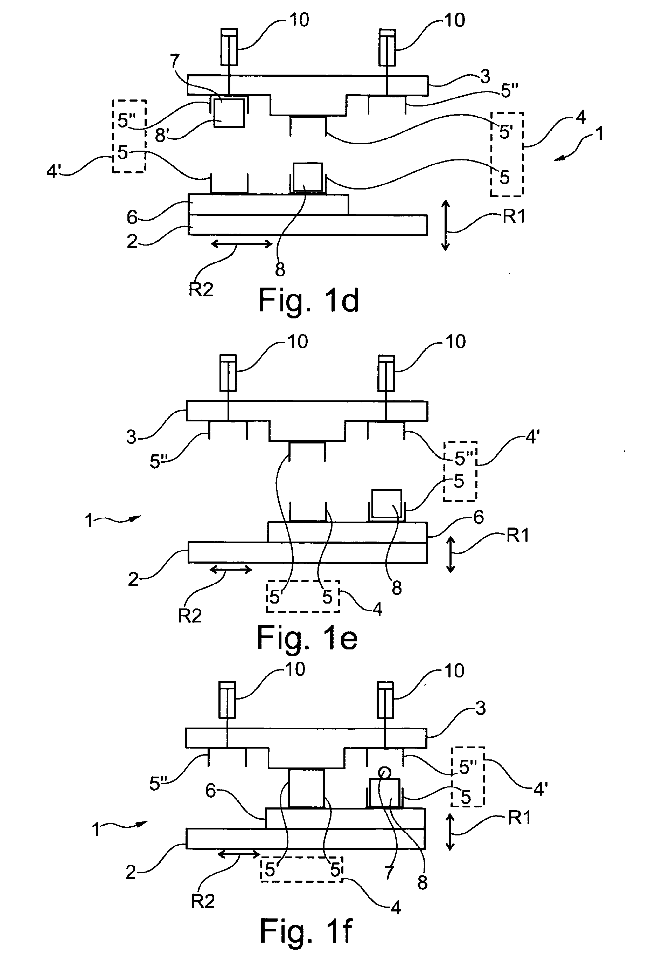

Anschließend werden die Formwerkzeuge 4, 4' geöffnet - und zwar zum einen durch Bewegen der ersten Formwerkzeugseite 2 in Schließrichtung weg von der zweiten Formwerkzeugseite 3 und zum anderen durch Einziehen des Hubzylinders 10 der der Formwerkzeughälfte 5" der dritten Art, welche Teil des Formwerkzeugs 4' vom Typ 2 ist, zugeordnet ist (Zustand gemäß Figur 1d)).

Beim Öffnen der Formwerkzeuge verbleibt das spritzgegossene, aber noch nicht beschichtete Formteil 8 in der Formwerkzeughälfte 5 der ersten Art, d.h. auf der ersten Formwerkzeugseite 2, und das beschichtete Formteil 8' in der Formwerkzeughälfte 5" der dritten Art, d.h. auf der zweiten Formwerkzeugseite 3.

Es folgt das Verlagern und erneute Zuordnen der Formwerkzeughälften 5, 5', 5" zueinander. Dabei wird die Formwerkzeughälfte 5 der ersten Art, in der sich das spritzgegossene Formteil 8 befindet, der leeren Formwerkzeughälfte 5" der dritten Art zugeordnet, wodurch diese beiden Formwerkzeughälften ein Formwerkzeug 4' vom Typ 2 bilden. Die zweite Formwerkzeughälfte 5 der ersten Art bildet zusammen mit der Formwerkzeughälfte 5' der zweiten ein Formwerkzeug 4 vom Typ 1.

Dieser Zustand ist in der Figur 1e dargestellt, wobei das beschichtete Formteil 8' ebenfalls bereits entnommen wurde.

Anschließend wird die erste Formwerkzeugseite erneut in der Schließrichtung R1 auf die zweite Formwerkzeugseite 3 zubewegt, wodurch das Formwerkzeug 4 vom Typ 1 geschlossen wird. Dies ist in der Figur 1f dargestellt.

Die Figur 1f zeigt auch, dass eine Beschichtungsmasse 7 auf das Formteil 8 aufgetragen wurde, was wiederum möglich ist, da das Formwerkzeug 4' vom Typ 2 noch nicht geschlossen ist.

Anschließend wird das Formwerkzeug 4' vom Typ 2 geschlossen, indem der Hubzylinder 10, der der Formwerkzeughälfte 5" der dritten Art, welche Bestandteil des Formwerkzeugs 4' vom Typ 2 ist, zugeordnet ist, ausgefahren wird.

Dieser Zustand ist in der Figur 1g dargestellt, wobei auch hier ersichtlich ist, dass in der Zwischenzeit der Spritzgießvorgang eines Formteils 8" begonnen hat. Auch hier wurde die Beschichtungsmasse 7 durch Schließen des Formwerkzeugs 4' vom Typ 2 auf dem Formteil 8 verteilt.

Anschließend werden die Formwerkzeuge 4, 4" geöffnet, was wiederum zum einen durch eine Bewegung der ersten Formwerkzeugseite in Schließrichtung weg von der zweiten Formwerkzeugseite 3 und zum anderen durch ein Einfahren des Hubzylinders 10 der Formwerkzeughälfte 5", welche Bestandteil des Formwerkzeugs 4' vom Typ 2 zugeordnet ist.

Auch in diesem Fall verbleibt das beschichtete Formteil 8 in der Formwerkzeughälfte 5" der dritten Art und das gerade spritzgegossene Formteil 8" in der Formwerkzeughälfte 5 der ersten Art.

Im Anschluss wird der Schiebetisch 6 in der Verlagerungsrichtung R2 um den zuvor zurückgelegten Weg zurückverlegt. Zudem wird das beschichtete Formteil 8 aus der Formwerkzeughälfte 5" der dritten Art entnommen. Auf diese Weise ergibt sich wieder die Ausgangslage, die in Figur 1a dargestellt ist, so dass das erfindungsgemäße Verfahren kontinuierlich mit der erfindungsgemäßen Vorrichtung durchgeführt werden kann.

In den Figuren nicht dargestellt, bei einer bevorzugten Ausführungsform jedoch enthalten, ist ein Prägekern oder Prägestempel, der zum einen die Schwindung der Beschichtungsmasse während der Aushärtung derselben ausgleichen kann und zum anderen zum Auswerfen bzw. Entnehmen des beschichteten Formteils verwendet werden kann.

Zusätzlich ist es auch möglich, einen Prägekern in einer der Formwerkzeughälften, die Bestandteil des Formwerkzeugs 4 vom Typ 1 sind, vorzusehen.

Denkbar ist grundsätzlich auch, dass in der zentralen Kavität, das heißt in dem Formwerkzeug vom Typ 1, nach dem Kunststoffeinspritzen die Kavität leicht öffnet, Lack eingespritzt wird und dann verprägt wird. Nach dem Öffnen und Verschieben in die zweite Kavität kann je nach Wunsch entweder die gleiche Seite nochmals beschichtet werden (Doppelbeschichtung) oder die gegenüberliegende Seite beschichtet werden.

### Bezugszeichenliste

- 1: Vorrichtung
- 2: erste Formwerkzeugseite
- 3: zweite Formwerkzeugseite
- 4, 4': Formwerkzeug
- 4: Formwerkzeug vom Typ 1
- 4': Formwerkzeug vom Typ 2
- 5, 5', 5": Formwerkzeughälfte
- 5: Formwerkzeughälfte der ersten Art
- 5': Formwerkzeughälfte der zweiten Art
- 5": Formwerkzeughälfte der dritten Art
- 6: Schiebetisch
- 7: Beschichtungsmasse
- 8, 8', 8": Formteil

- 10: Hubzylinder

- R1: Schließrichtung
- R2: Verlagerungsrichtung

- N: erste Anzahl
- M: zweite Anzahl

## Patentansprüche

1. Verfahren zum Herstellen von spritzgegossenen und beschichteten Formteilen mit folgenden Schritten:
a) Zuordnen von Formwerkzeughälften (5, 5', 5") einer ersten Formwerkzeugseite (2) zu Formwerkzeughälften (5, 5', 51') einer zweiten Formwerkzeugseite (3) einer Spritzgießmaschine, sodass zumindest ein erstes Formwerkzeug (4) vom Typ 1 und ein erstes Formwerkzeug (4') vom Typ 2 gebildet werden, wobei ein Formwerkzeug (4, 4') jeweils aus einer Formwerkzeughälfte (5, 5', 5") der ersten Formwerkzeugseite (2) und einer Formwerkzeughälfte (5, 5', 5") der zweiten Formwerkzeugseite (3) gebildet wird;
b) Schließen des Formwerkzeugs (4) vom Typ 1 durch Bewegen der ersten Formwerkzeugseite (2) und/oder der zweiten Formwerkzeugseite (3) entlang einer Schließrichtung (R1);
c) Spritzgießen eines Formteils (8) im ersten Formwerkzeug (4) vom Typ 1;
d) Öffnen des Formwerkzeugs (4) vom Typ 1 durch Bewegen der ersten Formwerkzeugseite (2) und/oder der zweiten Formwerkzeugseite (3) entlang der Schließrichtung (R1), wobei zumindest das in Schritt c) spritzgegossene Formteil (8) in einer der Formwerkzeughälften (5, 5', 5") auf einer der beiden Formwerkzeugseite (2,3) verbleibt;
e) Verlagern und erneutes Zuordnen der Formwerkzeughälften (5, 5', 5"), sodass ein zweites Formwerkzeug (4) vom Typ 1 und ein zweites Formwerkzeug (4') vom Typ 2 gebildet wird und zusätzlich das in Schritt c) spritzgegossene Formteil (8) in dem zweiten Formwerkzeug (4') vom Typ 2 angeordnet ist ;
f) Zyklisches Wiederholen der Schritte b) bis e), wobei abwechselnd in Schritt e) das erste Formwerkzeug (4') vom Typ 2 aus Schritt a) oder das zweite Formwerkzeug (4') vom Typ 2 aus Schritt e) gebildet wird;
**wobei**
• das Schließen des Formwerkzeugs (4') vom Typ 2, welches das zuvor in Schritt c) spritzgegossene Formteil (8) aufweist, während des Schritts c) durch Bewegen nur einer der Formwerkzeughälften (5, 5', 5") des Formwerkzeugs (4') vom Typ 2 entlang der Schließrichtung (R1) erfolgt;
• das in Schritt c) spritzgegossene Formteil (8) im ersten oder im zweiten Formwerkzeug (4') vom Typ 2 während des Schritts c) beschichtet wird,
**dadurch gekennzeichnet,**
• **dass** das Formwerkzeug (4') vom Typ 2 nach dem Schließen des Formwerkzeugs (4) vom Typ 1 teilweise offen bleibt, und
• **dass** das Öffnen der Formwerkzeuge (4') vom Typ 2 simultan durch die Bewegung der ersten Formwerkzeugseite (2) und/oder der zweiten Formwerkzeugseite (3) in der Schließrichtung (R1) im Schritt d) erfolgt, wobei das im zweiten Formwerkzeug (4') vom Typ 2 beschichtete Spritzgießformteil (8') auf der jeweils anderen Formwerkzeugseite in einer Formwerkzeughälfte (5") verbleibt, wie das in Schritt c) spritzgegossene Formteil (8).

2. Verfahren zum Herstellen von beschichteten Formteilen gemäß Anspruch 1, **dadurch gekennzeichnet, dass** das beschichte spritzgegossene Formteil (8") während Schritt c), d) oder e) oder während eines der Schritte b) oder c) des darauffolgenden Zyklus aus der Formwerkzeughälfte (5") des ersten oder zweiten Formwerkzeugs (4') vom Typ 2 entnommen wird, welche Formwerkzeughälfte (5") nicht einer Formhälfte (5) des ersten oder zweiten Formwerkzeugs (4) vom Typ 1 zugeordnet ist.

3. Verfahren zum Herstellen von beschichteten Formteilen gemäß Anspruch 1, **dadurch gekennzeichnet, dass** die Formwerkzeuge (4, 4') und/oder die Formwerkzeughälften (5, 5', 5") beim Schließen mit unterschiedlichen Schließkräften beaufschlagt werden.

4. Verfahren zum Herstellen beschichteter Formteile gemäß einem der vorhergehenden Ansprüche, **dadurch gekennzeichnet, dass** als Formwerkzeug (4) vom Typ 1 ein Spritzgießwerkzeug und als Formwerkzeug (4') vom Typ 2 ein Beschichtungswerkzeug verwendet wird.

5. Verfahren zum Herstellen beschichteter Formteile gemäß einem der vorhergehenden Ansprüche, **dadurch gekennzeichnet, dass** das Verlagern der Formwerkzeughälften (5, 5', 5") mittels einer Linearbewegung in einer Verlagerungsrichtung (R2), die insbesondere senkrecht zur Schließrichtung (R1) liegt, erfolgt.

6. Verfahren zum Herstellen beschichteter Formteile gemäß einem der vorhergehenden Ansprüche, **dadurch gekennzeichnet, dass** das Verlagern der Formwerkzeughälften (5, 5', 5") mittels eines Schiebetisches auf der ersten Formwerkzeugseite (2) und/oder der zweiten Formwerkzeugseite (3), bevorzugt auf der beweglichen Formwerkzeugseite (2, 3), erfolgt.

7. Verfahren zum Herstellen beschichteter Formteile gemäß einem der vorhergehenden Ansprüche, **dadurch gekennzeichnet, dass** das Formwerkzeug (4) vom Typ 1 unabhängig von der Verlagerung der Formwerkzeughälften (5, 5', 5") immer zumindest in der Verlagerungsrichtung (R2) zentralmittig bezüglich einer in Verlagerungsrichtung (R2) maschinenfesten ersten Formwerkzeugseite (2) und/oder der zweiten Formwerkzeugseite (3) gebildet wird.

8. Verfahren zum Herstellen beschichteter Formteile gemäß einem der vorhergehenden Ansprüche, **dadurch gekennzeichnet, dass** vor und/oder während und/oder nach dem Schließen des Formwerkzeugs (4') vom Typ 2 ein Auftrag einer Beschichtungsmasse (7) in eine Formwerkzeughälfte (5, 5', 5") des Formwerkzeugs (4') vom Typ 2 und/oder auf das zu beschichtende Formteil (8') erfolgt.

9. Vorrichtung, insbesondere Spritzgießmaschine, zum Durchführen des Verfahrens gemäß einem der vorhergehenden Ansprüche mit einer ersten Formwerkzeugseite (2), auf der eine erste Anzahl (N) von Formwerkzeughälften (5, 5', 5") angeordnet ist, und einer zweiten Formwerkzeugseite (3), auf der eine zweite Anzahl (M) von Formwerkzeughälften (5, 5', 5") angeordnet ist, wobei die Formwerkzeughälften (5, 5', 5") der ersten Formwerkzeugseite (2) und/oder der zweiten Formwerkzeugseite (3) so angeordnet werden können, dass sie in alternierbaren Kombinationen Formwerkzeuge (4) eines Typs 1 und Formwerkzeuge (4') eines Typs 2 bilden, wobei ein Formwerkzeug (4, 4') jeweils aus einer Formwerkzeughälfte (5, 5', 5") der ersten Formwerkzeugseite (2) und einer Formwerkzeughälfte (5, 5', 5") der zweiten Formwerkzeugseite (3) gebildet wird und wobei jedes Formwerkzeug (4, 4') eine Schließrichtung (R1) aufweist, entlang derer zumindest eine Formwerkzeughälfte (5, 5', 5") unabhängig von den restlichen Formwerkzeughälften (5, 5', 5") bewegt werden kann um das von dieser Formwerkzeughälfte (5, 5', 5") gebildete Formwerkzeug (4, 4') zu schließen und/oder zu öffnen, und wobei der Verfahrweg zum Schließen und Öffnen der Formwerkzeuge vom Typ 1 kleiner ist als der Verfahrweg zum Schließen und Öffnen der Formwerkzeuge vom Typ 2.

10. Vorrichtung gemäß Anspruch 9, **dadurch gekennzeichnet, dass** sie einen Schiebetisch und/oder einen Drehtisch aufweist, mittels dessen die Formwerkzeughälften (5, 5', 5") der ersten Formwerkzeugseite (2) und/oder der zweiten Formwerkzeugseite (3) verlagert und zueinander angeordnet werden können.

11. Vorrichtung gemäß Anspruch 9 oder 10, **dadurch gekennzeichnet, dass** zumindest eine Formwerkzeughälfte (5, 5', 5") der ersten Formwerkzeugseite (2) und/oder der zweiten Formwerkzeugseite (3) in zumindest einer Anordnungsebene, die insbesondere senkrecht zu der Schließrichtung (R1) liegt, schwimmend gelagert ist.

12. Vorrichtung gemäß einem der Ansprüche 9 bis 11, **dadurch gekennzeichnet, dass** auf der ersten Formwerkzeugseite (2) zwei Formwerkzeughälften (5) der ersten Art angeordnet sind, die in Kombination mit einer Formwerkzeughälfte (5') der zweiten Art ein Formwerkzeug (4) vom Typ 1 bilden kann.

13. Vorrichtung gemäß einem der Ansprüche 9 bis 12, **dadurch gekennzeichnet, dass** auf der zweiten Formwerkzeugseite (3) eine Formwerkzeughälfte (5') der zweiten Art und zwei Formwerkzeughälften (5") der dritten Art angeordnet sind, wobei eine Formwerkzeughälfte (5") der dritten Art in Kombination mit einer Formwerkzeughälfte (5') der zweiten Art ein Formwerkzeug (4') vom Typ 2 bilden kann.

14. Vorrichtung gemäß einem der Ansprüche 9 bis 13, **dadurch gekennzeichnet, dass** die Formwerkzeughälfte (5') der zweiten Art auf der zweiten Formwerkzeugseite (3) zwischen den zwei Formwerkzeughälften (5") der dritten Art und insbesondere an einer zentralmittigen Position der zweiten Formwerkzeugseite (3) bezüglich der Verlagerungsrichtung (R2) angeordnet ist.

15. Vorrichtung gemäß einem der Ansprüche 9 bis 14, **dadurch gekennzeichnet, dass** die Formwerkzeughälften (5") der dritten Art entlang der Differenz in den Verfahrwegen der Formwerkzeuge vom Typ 1 und Formwerkzeuge vom Typ 2 jeweils unabhängig von den restlichen Formwerkzeughälften (5, 5', 5") bewegt werden können, wobei die Bewegung insbesondere mittels eines hydraulischen und/oder eines Servoantriebs ermöglicht wird.

## Claims

1. A method for producing injection-moulded and coated moulded pieces having the following steps:
a) associating of mould tool halves (5, 5', 5") of a first mould tool side (2) to mould tool halves (5, 5', 5") of a second mould tool side (3) of an injection moulding machine, so that at least a first mould tool (4) of Type 1 and a first mould tool (4') of Type 2 are formed, wherein a mould tool (4, 4') is formed respectively from a mould tool half (5, 5', 5") of the first mould tool side (2) and from a mould tool half (5, 5', 5") of the second mould tool side (3);
b) closing of the mould tool (4) of Type 1 by moving the first mould tool side (2) and/or the second mould tool side (3) along a closing direction (R1);
c) injection moulding of a moulded piece (8) in the first mould tool (4) of Type 1;
d) opening of the mould tool (4) of Type 1 by moving the first mould tool side (2) and/or the second mould tool side (3) along the closing direction (R1), wherein at least the moulded piece (8) injection-moulded in step c) in one of the mould tool halves (5, 5', 5") remains on one of the two mould tool sides (2, 3);
e) displacing and renewed associating of the mould tool halves (5, 5', 5"), so that a second mould tool (4) of Type 1 and a second mould tool (4') of Type 2 is formed and additionally the moulded piece (8) injectionmoulded in step c) is arranged in the second mould tool (4') of Type 2;
f) cyclic repetition of steps b) to e), wherein alternately in step e) the first mould tool (4') of Type 2 is formed from step a) or the second mould tool (4') of Type 2 is formed from step e);
wherein
• the closing of the mould tool (4') of Type 2, which has the moulded piece (8) previously injection-moulded in step c), takes place during step c) by moving only one of the mould tool halves (5, 5', 5") of the mould tool (4') of Type 2 along the closing direction (R1);
• the moulded piece (8) injection-moulded in step c) in the first or in the second mould tool (4') of Type 2 is coated during step c),
**characterized in that**
• the mould tool (4') of Type 2, after the closing of the mould tool (4) of Type 1, remains partially open, and
• the opening of the mould tools (4') of Type 2 takes place simultaneously by the movement of the first mould tool side (2) and/or of the second mould tool side (3) in the closing direction (R1) in step d), wherein the injection moulded piece (8') coated in the second mould tool (4') of Type 2 remains on the respectively other mould tool side in a mould tool half (5"), as the moulded piece (8) injection-moulded in step c).

2. The method for producing coated moulded pieces according to Claim 1, **characterized in that** the coated injection-moulded moulded piece (8") during step c), d) or e) or during one of steps b) or c) of the subsequent cycle is removed from the mould tool half (5") of the first or second mould tool (4') of Type 2, which mould tool half (5") is not associated with a mould half (5) of the first or second mould tool (4) of Type 1.

3. The method for producing coated moulded pieces according to Claim 1, **characterized in that** the mould tools (4, 4') and/or the mould tool halves (5, 5', 5") are acted upon by different closing forces on closing.

4. The method for producing coated moulded pieces according to one of the preceding claims, **characterized in that** an injection mould tool is used as mould tool (4) of Type 1 and a coating tool is used as mould tool (4') of Type 2.

5. The method for producing coated moulded pieces according to one of the preceding claims, **characterized in that** the displacing of the mould tool halves (5, 5', 5") takes place by means of a linear movement in a displacement direction (R2), which lies in particular perpendicularly to the closing direction (R1).

6. The method for producing coated moulded pieces according to one of the preceding claims, **characterized in that** the displacing of the mould tool halves (5, 5', 5") takes place by means of a sliding table on the first mould tool side (2) and/or on the second mould tool side (3), preferably on the movable mould tool side (2, 3).

7. The method for producing coated moulded pieces according to one of the preceding claims, **characterized in that** the mould tool (4) of Type 1, independently of the displacement of the mould tool halves (5, 5', 5") is always formed centrally at least in the displacement direction (R2) with respect to a first mould tool side (2) fixed to the machine in displacement direction (R2) and/or to the second mould tool side (3).

8. The method for producing coated moulded pieces according to one of the preceding claims, **characterized in that** before and/or during and/or after the closing of the mould tool (4') of Type 2, an application of a coating material (7) takes place into a mould tool half (5, 5', 5") of the mould tool (4') of Type 2 and/or onto the moulded piece (8') which is to be coated.

9. A device, in particular an injection moulding machine, for carrying out the method according to one of the preceding claims with a first mould tool side (2), on which a first number (N) of mould tool halves (5, 5', 5") is arranged, and with a second mould tool side (3), on which a second number (M) of mould tool halves (5, 5', 5") is arranged, wherein the mould tool halves (5, 5', 5") of the first mould tool side (2) and/or of the second mould tool side (3) can be arranged so that they form in alternatable combinations mould tools (4) of a Type 1 and mould tools (4') of a Type 2, wherein a mould tool (4, 4') respectively of a mould tool half (5, 5', 5") of the first mould tool side (2) and of a mould tool half (5, 5', 5") of the second mould tool side (3) is formed and wherein each mould tool (4, 4') has a closing direction (R1), along which at least one mould tool half (5, 5', 5") can be moved independently of the remaining mould tool halves (5, 5', 5") in order to close and/or to open the mould tool (4, 4') formed by this mould tool half (5, 5', 5"), and wherein the travelling distance for closing and opening the mould tools of Type 1 is smaller than the travelling distance for closing and opening the mould tools of Type 2.

10. The device according to Claim 9, **characterized in that** it has a sliding table and/or a rotary table, by means of which the mould tool halves (5, 5', 5") of the first mould tool side (2) and/or of the second mould tool side (3) can be displaced and arranged with respect to one another.

11. The device according to Claim 9 or 10, **characterized in that** at least one mould tool half (5, 5', 5") of the first mould tool side (2) and/or of the second mould tool side (3) is mounted in a floating manner in at least one arrangement plane, which lies in particular perpendicularly to the closing direction (R1).

12. The device according to one of Claims 9 to 11, **characterized in that** on the first mould tool side (2) two mould tool halves (5) of the first kind are arranged, which in combination with a mould tool half (5') of the second kind can form a mould tool (4) of Type 1.

13. The device according to one of Claims 9 to 12, **characterized in that** on the second mould tool side (3) a mould tool half (5') of the second kind and two mould tool halves (5") of the third kind are arranged, wherein a mould tool half (5") of the third kind in combination with a mould tool half (5') of the second kind can form a mould tool (4') of Type 2.

14. The device according to one of Claims 9 to 13, **characterized in that** the mould tool half (5') of the second kind on the second mould tool side (3) is arranged between the two mould tool halves (5") of the third kind and in particular at a central position of the second mould tool side (3) with respect to the displacement direction (R2).

15. The device according to one of Claims 9 to 14, **characterized in that** the mould tool halves (5") of the third kind can be moved along the difference in the travelling distances of the mould tools of Type 1 and mould tools of Type 2 respectively independently of the remaining mould tool halves (5, 5', 5"), wherein the movement is enabled in particular by means of a hydraulic and/or a servo drive.

## Revendications

1. Procédé destiné à la fabrication de pièces moulées revêtues, comprenant les étapes suivantes :
a) attribution de moitiés d'outil de moulage (5, 5', 5") d'un premier côté d'outil de moulage (2) à des moitiés d'outil de moulage (5, 5', 5") d'un second côté d'outil de moulage (3) d'une machine de moulage par injection, de sorte qu'au moins un premier outil de moulage (4) de type 1 et un premier outil de moulage (4') de type 2 sont formés, sachant qu'un outil de moulage (4, 4') est formé respectivement d'une moitié de moule (5, 5', 5") du premier côté d'outil de moulage (2) et d'une moitié de moule (5, 5', 5") du second côté d'outil de moulage (3) ;
b) fermeture de l'outil de moulage (4) de type 1 par le déplacement du premier côté d'outil de moulage (2) et/ou du second côté d'outil de moulage (3) le long d'un sens de fermeture (R1) ;
c) moulage par injection d'une pièce moulée (8) dans le premier outil de moulage (4) de type 1 ;
d) ouverture de l'outil de moulage (4) de type 1 par le déplacement du premier côté d'outil de moulage (2) et/ou du second côté d'outil de moulage (3) le long du sens de fermeture (R1), sachant qu'au moins la pièce moulée par injection (8) à l'étape c) reste dans une des moitiés d'outil de moulage (5, 5', 5") sur l'un des deux côtés d'outil de moulage (2, 3) ;
e) déplacement et attribution de nouveau des moitiés d'outil de moulage (5, 5', 5") de telle sorte qu'un second outil de moulage (4) de type 1 et un second outil de moulage (4') de type 2 est formé et en outre, la pièce moulée par injection (8) à l'étape c) est disposée dans le second outil de moulage (4') de type 2 ;
f) répétition cyclique des étapes b) à e), sachant qu'alternativement à l'étape e), le premier outil de moulage (4') de type 2 de l'étape a) ou le second outil de moulage (4') de type 2 de l'étape e) est formé ;
sachant que
• la fermeture de l'outil de moulage (4') de type 2 qui présente la pièce moulée par injection (8) auparavant à l'étape c), est effectuée pendant l'étape c) par le déplacement d'une seule des moitiés d'outil de moulage (5, 5', 5") de l'outil de moulage (4') de type 2 le long du sens de fermeture (R1) ;
• la pièce moulée par injection (8) à l'étape c) est revêtue dans le premier ou le second outil de moulage (4') de type 2 pendant l'étape c),
**caractérisé en ce que**
• l'outil de moulage (4') de type 2 reste partiellement ouvert après la fermeture de l'outil de moulage (4) de type 1, et
• que l'ouverture des outils de moulage (4') de type 2 s'effectue simultanément à l'étape d) par le déplacement du premier côté d'outil de moulage (2) et/ou du second côté d'outil de moulage (3) dans le sens de fermeture (R1), sachant que la pièce moulée par injection (8') revêtue dans le second outil de moulage (4') de type 2 reste sur l'autre côté respectif d'outil de moulage dans une moitié d'outil de moulage (5"), comme la pièce moulée par injection (8) à l'étape c).

2. Procédé destiné à la fabrication de pièces moulées revêtues selon la revendication 1, **caractérisé en ce que** la pièce moulée par injection (8") pendant l'étape c), d) ou e) ou pendant une des étapes b) ou c) du cycle suivant est prélevée de la moitié d'outil de moulage (5") du premier ou second outil de moulage (4') de type 2, laquelle moitié d'outil de moulage (5") n'est pas attribuée à une moitié de moule (5) du premier ou second outil de moulage (4) de type 1.

3. Procédé destiné à la fabrication de pièces moulées revêtues selon la revendication 1, **caractérisé en ce que** les outils de moulage (4, 4') et/ou les moitiés d'outil de moulage (5, 5', 5") reçoivent différentes forces de fermeture pendant la fermeture.

4. Procédé destiné à la fabrication de pièces moulées revêtues selon l'une des revendications précédentes, **caractérisé en ce qu'**un outil de moulage par injection est employé en tant qu'outil de moulage (4) de type 1 et qu'un outil à revêtir est employé en tant qu'outil de moulage (4') de type 2.

5. Procédé destiné à la fabrication de pièces moulées revêtues selon l'une des revendications précédentes, **caractérisé en ce que** le déplacement des moitiés d'outil de moulage (5, 5', 5") s'effectue au moyen d'un déplacement linéaire dans un sens de déplacement (R2) qui est particulièrement perpendiculaire au sens de fermeture (R1).

6. Procédé destiné à la fabrication de pièces moulées revêtues selon l'une des revendications précédentes, **caractérisé en ce que** le déplacement des moitiés d'outil de moulage (5, 5', 5") s'effectue au moyen d'une table coulissante sur le premier côté d'outil de moulage (2) et/ou le second côté d'outil de moulage (3), de préférence sur le côté d'outil de moulage mobile (2, 3).

7. Procédé destiné à la fabrication de pièces moulées revêtues selon l'une des revendications précédentes, **caractérisé en ce que** l'outil de moulage (4) de type 1 est formé indépendamment du déplacement des moitiés d'outil de moulage (5, 5', 5") toujours au moins dans le sens de déplacement (R2) de façon centrale par rapport à un premier côté d'outil de moulage (2) fixe sur la machine dans le sens de déplacement (R2) et/ou le second côté d'outil de moulage (3).

8. Procédé destiné à la fabrication de pièces moulées revêtues selon l'une des revendications précédentes, **caractérisé en ce qu'**avant et/ou pendant et/ou après la fermeture de l'outil de moulage (4') de type 2, a lieu une application d'une masse de revêtement (7) dans une moitié de moule (5, 5', 5") de l'outil de moulage (4') de type 2 et/ou sur la pièce moulée (8') à revêtir.

9. Dispositif, en particulier machine de moulage par injection, destiné à exécuter le procédé selon l'une des revendications précédentes comprenant un premier côté d'outil de moulage (2) sur lequel un premier nombre (N) de moitiés d'outil de moulage (5, 5', 5") est disposé, et un second côté d'outil de moulage (3) sur lequel un second nombre (M) de moitiés d'outil de moulage (5, 5', 5") est disposé, sachant que les moitiés d'outil de moulage (5, 5', 5") du premier côté d'outil de moulage (2) et/ou du second côté d'outil de moulage (3) peuvent être ainsi placées qu'elles forment, en combinaisons pouvant être alternées, des outils de moulage (4) d'un type 1 et des outils de moulage (4') d'un type 2, sachant qu'un outil de moulage (4, 4') est formé respectivement par une moitié de moule (5, 5', 5") du premier côté d'outil de moulage (2) et une moitié de moule (5, 5', 5") du second côté d'outil de moulage (3), et sachant que chaque outil de moulage (4, 4') présente un sens de fermeture (R1) le long duquel au moins une moitié de moule (5, 5', 5") peut être déplacée indépendamment des moitiés d'outil de moulage (5, 5', 5") restantes pour fermer et/ou ouvrir l'outil de moulage (4, 4') formé par ces moitiés d'outil de moulage (5, 5', 5"), et sachant que la course de fermeture et d'ouverture des outils de moulage de type 1 est inférieur à la course pour la fermeture et l'ouverture des outils de moulage de type 2.

10. Dispositif selon la revendication 9, caractérisé en qu'il présente une table coulissante et/ou une table rotative, au moyen de laquelle les moitiés d'outil de moulage (5, 5', 5") du premier côté d'outil de moulage (2) et/ou du second côté d'outil de moulage (3) peuvent être déplacées et disposées les unes par rapport aux autres.

11. Dispositif selon la revendication 9 ou 10, **caractérisé en ce qu'**au moins une des moitiés d'outil de moulage (5, 5', 5") du premier côté d'outil de moulage (2) et/ou du second côté d'outil de moulage (3) est disposée de façon flottante dans au moins un plan d'agencement qui est particulièrement vertical au sens de fermeture (R1).

12. Dispositif selon l'une des revendications 9 à 11, **caractérisé en ce que** deux moitiés d'outil de moulage (5) du premier genre sont disposées sur le premier côté d'outil de moulage (2), lesquelles peuvent former un outil de moulage (4) de type 1 en combinaison avec une moitié d'outil de moule (5') du deuxième genre.

13. Dispositif selon l'une des revendications 9 à 12, **caractérisé en ce qu'**une moitié d'outil de moulage (5') du deuxième genre et deux moitiés d'outil de moulage (5") du troisième genre sont disposées sur le second côté d'outil de moulage (3), sachant qu'une moitié d'outil de moulage (5") du troisième genre peut former un outil de moulage (4') de type 2 en combinaison avec une moitié d'outil de moulage (5') du deuxième genre.

14. Dispositif selon l'une des revendications 9 à 13, **caractérisé en ce que** la moitié de moule (5') du deuxième genre est disposée sur le second côté d'outil de moulage (3) entre les deux moitiés d'outil de moulage (5") du troisième genre, et en particulier à une position centrale du second côté d'outil de moulage (3) par rapport au sens de déplacement (R2).

15. Dispositif selon l'une des revendications 9 à 14, **caractérisé en ce que** les moitiés d'outil de moulage (5") du troisième genre peuvent être déplacées le long de la différence dans les trajets de déplacement des outils de moulage de type 1 et des outils de moulage de type 2, respectivement indépendamment des moitiés d'outil de moulage (5, 5', 5") restantes, sachant que le déplacement est possible en particulier au moyen d'un entraînement hydraulique et/ou asservi.
